(19) Europäisches Patentamt
European Patent Office
Office européen des brevets

(11) Veröffentlichungsnummer: **0 668 321 A2**

# (12) EUROPÄISCHE PATENTANMELDUNG

(21) Anmeldenummer: **95101259.0**

(22) Anmeldetag: **31.01.95**

(51) Int. Cl.6: **C08L 59/02**, C08K 13/02, //(C08K13/02,5:00,3:04)

(30) Priorität: **09.02.94 DE 4404081**

(43) Veröffentlichungstag der Anmeldung: **23.08.95 Patentblatt 95/34**

(84) Benannte Vertragsstaaten: **BE DE FR GB IT NL**

(71) Anmelder: **BASF Aktiengesellschaft**
**Carl-Bosch-Strasse 38**
**D-67063 Ludwigshafen (DE)**

(72) Erfinder: **Kielhorn-Bayer, Sabine, Dr.**
**Dürkheimer Strasse 10**
**D-67133 Maxdorf (DE)**
Erfinder: **Görrissen, Heiner, Dr.**
**Im Zinkig 112**
**D-67069 Ludwigshafen (DE)**
Erfinder: **Zeiner, Hartmut, Dr.**
**Paracelsusstrasse 18**
**D-67071 Ludwigshafen (DE)**
Erfinder: **Sänger, Dietrich, Dr.**
**Lorscher Ring 16a**
**D-67227 Frankenthal (DE)**

## (54) UV-stabilisierte Polyoxymethylenformmassen.

(57) Die Erfindung betrifft thermoplastische Formmassen, enthaltend

A) 40-99,7 Gew.-% eines Polyoxymethylenhomo- oder copolymerisates

B) 0,1 - 2 Gew.-% mindestens eines Stabilisators aus der Gruppe der Benzotriazolderivate oder Benzophenonderivate oder aromatischen Benzoatderivate,

C) 0,1 - 2 Gew.-% mindestens einer sterisch gehinderten Aminverbindung

D) 0,1 - 4 Gew.-% Ruß mit einer Dibutylphthalat-Adsorption von mindestens 100 ml/100 g und einer mittleren Primärteilchengröße ≦ 30 nm,

E) 0 - 50 Gew.-% eines schlagzäh modifizierenden Polymeren und

F) 0 - 50 Gew.-% faser- oder teilchenförmige Füllstoffe oder deren Mischungen.

EP 0 668 321 A2

Die Erfindung betrifft thermoplastische Formmassen, enthaltend

A) 40-99,7 Gew.-% eines Polyoxymethylenhomo- oder copolymerisates

B) 0,1 - 2 Gew.-% mindestens eines Stabilisators aus der Gruppe der Benzotriazolderivate oder Benzophenonderivate oder aromatischen Benzoatderivate,

C) 0,1 - 2 Gew.-% mindestens einer sterisch gehinderten Aminverbindung

D) 0,1 - 4 Gew.-% Ruß mit einer Dibutylphthalat-Adsorption von mindestens 100 ml/100 g und einer mittleren Primärteilchengröße ≦ 30 nm,

E) 0 - 50 Gew.-% eines schlagzäh modifizierenden Polymeren und

F) 0 - 50 Gew.-% faser- oder teilchenförmige Füllstoffe oder deren Mischungen.

Weiterhin betrifft die Erfindung die Verwendung derartiger Formmassen zur Herstellung von Formkörpern jeglicher Art, und die so erhaltenen Formkörper.

Polyoxymethylenhomo- und/oder copolymerisate sind seit langem bekannt. Die Polymere zeichnen sich durch eine Vielzahl ausgezeichneter Eigenschaften aus, so daß sie für die verschiedenen technischen Anwendungen geeignet sind, insbesondere für Formteile im Automobilbereich.

Eine nachteilige Eigenschaft besteht jedoch in der geringen UV-Stabilität, welche zu einem Abbau und Zersetzung des Polymeren führt.

Der Zusatz von Ruß zur Verbesserung der UV-Stabilität in Verbindung meist mit anderen als Stabilisatoren geeignete Verbindungen ist Gegenstand zahlreicher Anmeldungen:

Aus der EP-A 274 765 sind POM-Formmassen bekannt, welche kohleartige Materialien (u.a. Ruß) mit Verarbeitungshilfsmitteln enthalten. Für POM mit thermoplastischen Polyurethanen (Schlagzähmodifier) ist aus der JP-A 01/201356 der Zusatz von Ethylencopolymeren mit Ruß bekannt.

Weitere spezielle Rußzusätze sind aus der EP-A 297 888, JP-A 61/271355, JP-A 56/024437, CA 828 229 und DE-A 16 69 849 bekannt, wobei gegebenenfalls weitere Stabilisatoren mitverwendet werden.

Geeignete UV-Stabilisatoren sind u.a. aus der EP-A 300 573 (Methacrylatpolymere), EP-A 368 635 (Acrylatpolymere), EP-A 411 867 (Benzotriazole und Stickstoffverbindung) und EP-A 448 037 (sterisch gehindertes Amin auf Oxopiperazinyltriazinbasis) bekannt.

Zusätzlich sind aus der EP-A 171 941 und R. Gächter, H. Müller, Kunststoff-Additive (2. Ausgabe) Carl Hanser Verlag München, 1983, S. 85ff Kombinationen von Benzotriazolderivaten mit sterisch gehinderten Aminverbindungen und einem nicht spezifizierten Ruß als UV-Stabilisatoren für POM bekannt.

Trotz dieser Maßnahmen besitzen bekannte Polyoxymethylenformmassen jedoch für einige Anwendungen (z.B. Außenteile im KFZ-Bereich) eine nicht ausreichende UV-Stabilität.

Aufgabe der vorliegenden Erfindung war es daher, die UV-Stabilität von Polyoxymethylen-Formmassen zu verbessern und somit gleichzeitig die Bewitterungsbeständigkeit zu erhöhen. Gleichzeitig sollen mechanische Eigenschaften wie hohe Steifigkeit, Festigkeit und eine hervorragende Verarbeitungsstabilität erhalten bleiben.

Diese Aufgabe wurde durch die eingangs definierten thermoplastischen Formmassen gemäß Anspruch 1 gelöst.

Bevorzugte Massen dieser Art sind den Unteransprüchen zu entnehmen.

Als Komponente A) enthalten die erfindungsgemäßen Formmassen 40 bis 99,7, vorzugsweise 60 bis 99 Gew.-% und insbesondere 70 bis 99 Gew.-% eines Polyoxymethylenhomo- oder Copolymerisats.

Derartige Polymerisate sind dem Fachmann an sich bekannt und in der Literatur beschrieben.

Ganz allgemein weisen diese Polymere mindestens 50 mol-% an wiederkehrenden Einheiten $-CH_2O-$ in der Polymerhauptkette auf.

Die Homopolymeren werden im allgemeinen durch Polymerisation von Formaldehyd oder Trioxan hergestellt, vorzugsweise in der Gegenwart von geeigneten Katalysatoren.

Im Rahmen der Erfindung werden Polyoxymethylencopolymere als Komponente A bevorzugt, insbesondere solche, die neben den wiederkehrenden Einheiten $-CH_2O-$ noch bis zu 50, vorzugsweise 0,1 bis 20 und insbesondere 0,3 bis 10 mol-% an wiederkehrenden Einheiten

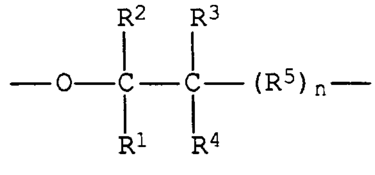

wobei $R^1$ bis $R^4$ unabhängig voneinander ein Wasserstoffatom, eine $C_1$- bis $C_4$-Alkylgruppe oder eine halogensubstituierte Alkylgruppe mit 1 bis 4 C-Atomen und $R^5$ eine $-CH_2-$, $-CH_2O-$, eine $C_1$- bis $C_4$-Alkyl-

oder $C_1$- bis $C_4$-Haloalkyl substituierte Methylengruppe oder eine entsprechende Oxymethylengruppe darstellen und n einen Wert im Bereich von 0 bis 3 hat. Vorteilhafterweise können diese Gruppen durch Ringöffnung von cyclischen Ethern in die Copolymere eingeführt werden. Bevorzugte cyclische Ether sind solche der Formel

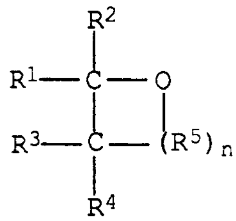

wobei $R^1$ bis $R^5$ und n die obengenannte Bedeutung haben. Nur beispielsweise seien Ethylenoxid, 1,2-Propylenoxid, 1,2-Butylenoxid, 1,3-Butylenoxid, 1,3-Dioxan, 1,3-Dioxolan und 1,3-Dioxepan als cyclische Ether genannt sowie lineare Oligo- oder Polyformale wie Polydioxolan oder Polydioxepan als Comonomere genannt.

Als Komponente A) ebenfalls geeignet sind Oxymethylenterpolymerisate, die beispielsweise durch Umsetzung von Trioxan, einem der vorstehend beschriebenen cyclischen Ether mit einem dritten Monomeren, vorzugsweise einer bifunktionellen Verbindung der Formel

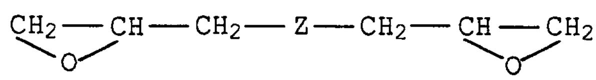

wobei Z eine chemische Bindung, -O-, ORO- (R = $C_1$- bis $C_8$-Alkylen oder $C_2$- bis $C_8$-Cycloalkylen) ist, hergestellt werden.

Bevorzugte Monomere dieser Art sind Ethylendiglycid, Diglycidylether und Diether aus Glycidylen und Formaldehyd, Dioxan oder Trioxan im Molverhältnis 2 : 1 sowie Diether aus 2 mol Glycidylverbindung und 1 mol eines aliphatischen Diols mit 2 bis 8 C-Atomen wie beispielsweise die Diglycidylether von Ethylenglykol, 1,4-Butandiol, 1,3-Butandiol, Cyclobutan-1,3-diol, 1,2-Propandiol und Cyclohexan-1,4-diol, um nur einige Beispiele zu nennen.

Verfahren zur Herstellung der vorstehend beschriebenen Homo- und Copolymerisate sind dem Fachmann bekannt und in der Literatur beschrieben, so daß sich hier nähere Angaben erübrigen.
Die bevorzugten Polyoxymethylencopolymere haben Schmelzpunkte von mindestens 150 °C und Molekulargewichte (Gewichtsmittelwert) $M_w$ im Bereich von 5000 bis 200000, vorzugsweise von 7000 bis 150000.

Endgruppenstabilisierte Polyoxymethylenpolymerisate, die an den Kettenenden C-C-Bindungen aufweisen, werden besonders bevorzugt.

Die erfindungsgemäßen Formmassen enthalten als Komponente B) 0,1 - 2, vorzugsweise 0,2 - 1,5 und insbesondere 0,2 - 1 Gew.-% mindestens eines Stabilisators aus der Gruppe der Benzotriazolderivate oder Benzophenonderivate oder aromatischen Benzoatderivate.

Geeignete Benzotriazolderivate sind:
2-(2-Hydroxy-5-methylphenyl)-benzotriazol,
2-(2-Hydroxy-3,5-di-t-butylphenyl)-benzotriazol,
2-(3,5-Di-t-amyl-hydroxyphenyl)-benzotriazol,
2-(2'-Hydroxy-3',5,-diisoamylphenyl)-benzotriazol,
2-[2'-Hydroxy-3',5'-bis(1,1-dimethyl-benzyl)phenyl]-benzotriazol
2-(2'-Hydroxy-4-octoxyphenyl)benzotriazol,
2-(2H-Benzotriazol-2-yl)-4-(1,1,3,3-tetramethylbutyl)-phenol
2-(2H-Benzotriazol-2-yl)-2,4-(tert.butyl)-phenol
2-(2H)-Benzotriazol-2-yl)-4,6-bis-(1,1-dimethylpropyl)-
phenol und
2-(2H-Benzotriazol-2-yl)-4-(1,1-dimethylethyl)-6-(1-methylpropyl)-phenol.

Derartige Verbindungen sind unter der Bezeichnung Tinuvin ® (eingetragenes Warenzeichen der Firma Ciba Geigy AG) im Handel erhältlich.

Bevorzugte Benzophenonderivate sind:
2,4-Dihydroxybenzophenon,
2-Hydroxy-4-methoxybenzophenon,
2-Hydroxy-4-octoxybenzophenon,
2-Hydroxy-4-dodecyloxybenzophenon,
2,2'-Dihydroxy-4-methoxybenzophenon,
2,2'-Dihydroxy-4,4'-dimethoxybenzophenon,
2-Hydroxy-4-methoxy-5-sulphobenzophenone und
2-Hydroxy-4-oxybenzylbenzophenon.

Als aromatische Benzoatderivate seien beispielhaft p-t-Butylphenylsalicylat und p-Octylphenylsalicylat genannt.

Als Komponente C) enthalten die erfindungsgemäßen Formmassen 0,1 - 2, vorzugsweise 0,2 - 1,5 und insbesondere 0,2 - 1 Gew.-% mindestens einer sterisch gehinderten Aminverbindung, vorzugsweise kommen z.B. Verbindungen der Formel Ia

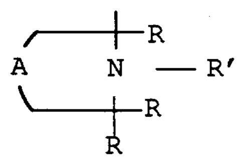

Ia

in Betracht, wobei

R gleiche oder verschiedene Alkylreste
R' Wasserstoff oder einem Alkylrest und
A eine gegebenenfalls substituierte 2- oder 3-gliedrige Alkylenkette

bedeutet.

Bevorzugte Komponente C) sind Derivate des 2,2,6,6-Tetramethylpiperidins wie:
4-Acetoxy-2,2,6,6-tetramethylpiperidin,
4-Stearoyloxy-2,2,6,6-tetramethylpiperidin,
4-Aryloyloxy-2,2,6,6-tetramethylpiperidin,
4-Methoxy-2,2,6,6-tetramethylpiperidin,
4-Benzoyloxy-2,2,6,6-tetramethylpiperidin,
4-Cyclohexyloxy-2,2,6,6-tetramethylpiperidin,
4-Phenoxy-2,2,6,6-tetramethylpiperidin,
4-Benzyloxy-2,2,6,6-tetramethylpiperidin,
4-(Phenylcarbamoyloxy)-2,2,6,6-tetramethylpiperidin.

Ferner sind
Bis(2,2,6,6-tetramethyl-4-piperidyl)oxalat,
Bis(2,2,6,6-tetramethyl-4-piperidyl)malonat,
Bis(2,2,6,6-tetramethyl-4-piperidyl)adipat,
Bis(2,2,6,6-tetramethyl-4-piperidyl)sebacat,
Bis(1,2,2,6,6-pentamethyl-piperidyl)sebacat,
Bis(2,2,6,6-tetramethyl-4-piperidyl)terephthalat,
1,2-bis(2,2,6,6-tetramethyl-4-piperidyloxy)ethan,
Bis(2,2,6,6-tetramethyl-4-piperidyl)hexamethylen-1,6-dicarbamat,
Bis(1-methyl-2,2,6,6-tetramethyl-4-diperidyl)adipat und
Tris(2,2,6,6-tetramethyl-4-piperidyl)benzen-1,3,5-tricarboxylat.
geeignet.

Darüber hinaus sind höhermolekulare Piperidinderivate wie das Dimethylsuccinatpolymer mit 4-Hydroxy-2,2,6,6-tetramethyl-1-piperidinethanol
oder
Poly-6-(1,1,3,3-tetramethylbutyl)amino-1,3,5-triazin-2,4-diyl(2,2,6,6-tetramethyl-4-piperidinyl)imino-1,6-hexandiyl(2,2,6,6-tetramethyl-14-piperidinyl)imino geeignet.

Derartige Verbindungen sind unter der Bezeichnung Tinuvin ® oder Chimasorb® (eingetragene Warenzeichen der Firma Ciba-Geigy AG) im Handel erhältlich.

Als Komponente D) enthalten die erfindungsgemäßen Formmassen 0,1 - 4, bevorzugt 0,2 - 2 und 0,2 - 1 Gew.-% eines Rußes mit einer Dibutylphthalat-Adsorption (DBP-Adsorption) von mindestens 100 ml/100

g, bevorzugt 120 ml/100 g und insbesondere von 150 ml/100 g sowie einer mittleren Primärteilchengröße ≦ 30, bevorzugt ≦ 25 und insbesondere ≦ 20 nm.

Die DBP-Adsorptionsrate wird im allgemeinen nach DIN 53601 oder ASTM-D 2414 bestimmt und stellt ein Maß für die Struktur des jeweiligen Rußes dar. Unter Struktur versteht man die Verkettung von Rußprimärteilchen zu Aggregaten. Zur Bestimmung dieser Kenngröße wird zu 20 g Pigmentruß, der in einem Kneter mit meßbarer Kraftübertragung (Plastographen) vorgelegt wird, so lange Dibutylphthalat zugetropft bis das maximale Drehmoment (Netzpunkt des Rußes) überschritten ist.

Unter der Primärteilchengröße versteht man im allgemeinen den arithmetischen Mittelwert der Teilchengröße.

Hierzu bestimmt man anhand von mehreren elektronenmikroskopischen Aufnahmen der Reißprobe die Durchmesser der Partikel. Üblicherweise erfolgt die Auszählung der Teilchen und Auswertung des arithmetischen Mittelwertes mittels eines Zeiss-Teilchengrößen-Analysators nach Endter und Gebauer. Für nähere Einzelheiten sei hier auf die Firmenschriften der Degussa AG verwiesen: Untersuchungsmethoden für Pigmentgröße (September 1989, 14. Auflage, S. 10) und Was ist Ruß? (1973, S. 15).

Ein derartiger Ruß ist z.B. unter dem Handelsnamen Farbruß FW 18 ® (eingetragenes Warenzeichen der Degussa AG) im Handel erhältlich.

Als Komponente E) enthalten die erfindungsgemäßen thermoplastischen Formmassen 0 bis 50, vorzugsweise 0 bis 40 Gew.-% eines schlagzäh modifizierenden Polymeren (im folgenden auch als kautschukelastisches Polymerisat oder Elastomer bezeichnet).

Bevorzugte Arten von solchen Elastomeren sind die sog. Ethylen-Propylen (EPM) bzw. Ethylen-Propylen-Dien-(EPDM)-Kautschuke.

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo-(5.2.1.0.2.6)-3,8-decadien oder deren Mischungen genannt. Bevorzugt werden Hexa-1,5-dien, 5-Ethylidennorbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

Die EPDM-Kautschuke können auch mit weiteren Monomeren gepfropft sein, z.B. mit Glycidyl(meth)-acrylaten, (Meth)acrylsäureestern und (Meth)acrylamiden.

Eine weitere Gruppe bevorzugter Kautschuke sind Copolymere des Ethylens mit Estern von (Meth)-acrylsäure. Zusätzlich können die Kautschuke noch Epoxy-Gruppen enthaltende Monomere enthalten. Diese Epoxy-Gruppen enthaltende Monomere werden vorzugsweise durch Zugabe Epoxy-Gruppen enthaltenden Monomeren der allgemeinen Formeln I oder II zum Monomerengemisch in den Kautschuk eingebaut

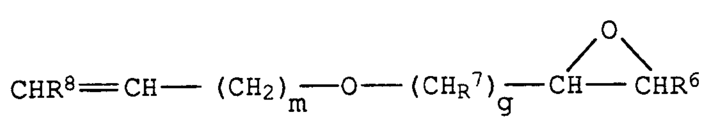 (I)

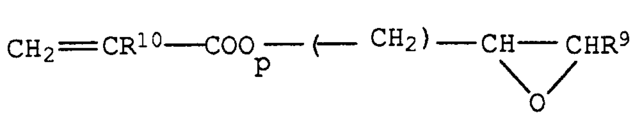 (II)

wobei $R^6$ - $R^{10}$ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist.

Vorzugsweise bedeuten die Reste $R^6$ bis $R^8$ Wasserstoff, wobei m für 0 oder 1 und g für 1 steht. Die entsprechenden Verbindungen sind Allylglycidylether und Vinylglycidylether.

Bevorzugte Verbindungen der Formel II sind Epoxygruppen enthaltende Ester der Acrylsäure und/oder Methacrylsäure, wie Glycidylacrylat und Glycidylmethacrylat.

Vorteilhaft bestehen die Copolymeren aus 50 bis 98 Gew.-% Ethylen, 0 bis 20 Gew.-% Epoxygruppen enthaltenden Monomeren sowie der restlichen Menge an (Meth)acrylsäureestern.

Besonders bevorzugt sind Copolymerisate aus

50 bis 98, insbesondere 55 bis 95 Gew.-% Ethylen, insbesondere 0,3 bis 20 Gew.-% Glycidylacrylat und/oder

0 bis 40, insbesondere 0,1 bis 20 Gew.-% Glycidylmethacrylat, und

1 bis 50, insbesondere 10 bis 40 Gew.-% n-Butylacrylat und/oder 2-Ethylhexylacrylat.

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalysatoren sind an sich bekannt.

Grundsätzlich können homogen aufgebaute Elastomere oder aber solche mit einem Schalenaufbau eingesetzt werden. Der schalenartige Aufbau wird durch die Zugabereihenfolge der einzelnen Monomeren bestimmt; auch die Morphologie der Polymeren wird von dieser Zugabereihenfolge beeinflußt.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0 °C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20 °C) am Aufbau des Elastomeren beteiligt, so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Amino- oder Amidgruppen sowie funktionelle Gruppen, die durch Mitverwendung von Monomeren der allgemeinen Formel

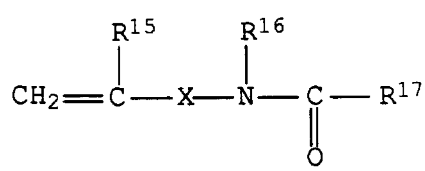

eingeführt werden können,

wobei die Substituenten folgende Bedeutung haben können:

- $R^{15}$ Wasserstoff oder eine $C_1$- bis $C_4$-Alkylgruppe,
- $R^{16}$ Wasserstoff, eine $C_1$- bis $C_8$-Alkylgruppe oder eine Arylgruppe, insbesondere Phenyl,
- $R^{17}$ Wasserstoff, eine $C_1$- bis $C_{10}$-Alkyl-, eine $C_6$- bis $C_{12}$-Arylgruppe oder $-OR^{18}$
- $R^{18}$ eine $C_1$- bis $C_8$-Alkyl- oder $C_6$- bis $C_{12}$-Arylgruppe, die gegebenenfalls mit O- oder N-haltigen Gruppen substituiert sein können,
- X eine chemische Bindung, eine $C_1$- bis $C_{10}$-Alkylen- oder $C_6$-$C_{12}$-Arylengruppe oder

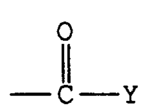

- Y O-Z- oder NH-Z und

Z eine $C_1$- bis $C_{10}$-Alkylen- oder $C_6$- bis $C_{12}$-Arylengruppe.

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)ethylmethacrylat, (N,N-Dimethylamino)ethylacrylat, (N,N-Dimethylamino)methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können auch sogenannte pfropfvernetzende Monomere (graftlinking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallyllitavonat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im allgemeinen beträgt der Anteil dieser vernetzenden Monomeren an der Komponente E) bis zu 5 Gew.-%, vorzugsweise nicht mehr als 3 Gew.-%, bezogen auf E).

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Monomere für den Kern | Monomere für die Hülle |
|---|---|
| Buta-1,3-dien, Isopren, n-Butylacrylat, Ethylhexylacrylat oder deren Mischungen, ggf. zusammen mit vernetzenden Monomeren | Styrol, Acrylnitril, (Meth)acrylate, ggf. mit reaktiven Gruppen wie hierin beschrieben |

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Die beschriebenen Elastomere E) können auch nach anderen üblichen Verfahren, z.B. durch Suspensionspolymerisation, hergestellt werden.

Weitere bevorzugte Kautschuke sind Polyurethane, wie in den EP-A 115 846, EP-A 115 847, EP-A 116 456, EP-A 117 664 und der EP-A 327 384 beschrieben. Kommerziell im Handel sind solche Produkte z.B. unter den Bezeichnungen Desmopan® (Bayer AG) oder Elastollan® (Elastogran Polyurethane GmbH) erhältlich.

Selbstverständlich können auch Mischungen der vorstehend aufgeführten Kautschuktypen eingesetzt werden.

Als Komponente F) können die erfindungsgemäßen Formmassen 0 bis 50, vorzugsweise 5 bis 40 Gew.-% eines faser- oder teilchenförmigen Füllstoffs oder deren Mischungen enthalten.

Als verstärkend wirkende Füllstoffe seien beispielsweise Kaliumtitanat-Whisker, Kohlenstoff- und vorzugsweise Glasfasern genannt, wobei die Glasfasern z.B. in Form von Glasgeweben, -matten, -vliesen und/oder Glasseidenrovings oder geschnittener Glasseide aus alkaliarmem E-Glas mit einem Durchmesser von 5 bis 200 $\mu$m eingesetzt werden können, wobei die faserförmigen Füllstoffe nach ihrer Einarbeitung vorzugsweise eine mittlere Länge von 0,05 bis 1 mm, insbesondere 0,1 bis 0,5 mm aufweisen.

Andere geeignete Füllstoffe sind beispielsweise Wollastonit, Calciumcarbonat, Glaskugeln, Quarzmehl, Si- und Bornitrid oder Mischungen dieser Füllstoffe.

Neben den Komponenten A, B), C) und D) sowie ggf. E) und F) können die erfindungsgemäßen Formmassen noch übliche Zusatzstoffe und Verarbeitungshilfsmittel enthalten. Nur beispielhaft seien hier Zusätze zum Abfangen von Formaldehyd (Formaldehyd-Scavenger), Weichmacher, Schmiermittel, Antioxidantien (insbesondere sterisch gehinderte Phenole; Irganox®, eingetragenes Warenzeichen der Firma Ciba-Geigy AG, s. DE-A 27 02 661), Haftvermittler, Lichtstabilisatoren und Pigmente genannt. Der Anteil solcher Zusätze liegt im allgemeinen im Bereich von 0,001 bis 5 Gew.-%.

Als Nukleierungsmittel können die erfindungsgemäßen Formmassen gemäß einer bevorzugten Ausführungsform ein Malein-Formaldehyd-Kondensat enthalten. Geeignete Produkte werden z.B. in der DE 25 40 207 beschrieben.

Entsprechende Verbindungen sind dem Fachmann bekannt und beispielsweise in der EP-A 327 384 beschrieben.

Die Herstellung der erfindungsgemäßen thermoplastischen Formmassen erfolgt durch Mischen der Komponenten in an sich bekannter Weise, weshalb sich hier detaillierte Angaben erübrigen. Vorteilhaft erfolgt die Mischung der Komponenten auf einem Extruder.

Die erfindungsgemäßen thermoplastischen Formmassen zeichnen sich durch eine sehr gute UV-Stabilität unter Beibehaltung der guten mechanischen Eigenschaften aus.

Demzufolge eignen sie sich besonders zur Herstellung von Formkörpern im Automobilbau (z.B. Lautsprecherabdeckungen, Gleitschienen für Schutzdächer, Tankdeckel, Türgriffe etc.) oder in der Landwirtschaft (z.B. Berieselungsanlagen).

Beispiele

Komponente A:

Polyoxymethylencopolymerisat aus 97,3 Gew.-% Trioxan und 2,7 Gew.-% Butandiolformal. Das Produkt enthielt noch ungefähr 3 Gew.-% nicht umgesetztes Trioxan und 5 Gew.-% thermisch instabile Anteile. Nach Abbau der thermisch instabilen Anteile hatte das Copolymer einen Schmelzindex von 9 g/10 min (190 °C, 2,16 N, nach ISO 1133).

Komponente B:

1. Tinuvin® 234 der Firma Ciba-Geigy AG: 2-(2'-Hydroxy-3',5'-di-(1,1-dimethylbenzyl)phenyl)benzotriazol
2. Tinuvin® 320 der Firma Ciba-Geigy AG: 2-(2-H-Benzotriazol-2-yl)-2,4-(tert.butyl)phenol
3. Tinuvin® 328 der Firma Ciba-Geigy AG: 2-(2H-Benzotriazol-2-yl)-4,6-bis-(1,1-dimethylpropyl)-phenol
4. Tinuvin® 329 der Firma Ciba-Geigy AG: 2-(2H-Benzotriazol-2-yl)-4-(1,1,3,3-tetramethylbutyl)phenol
5. Tinuvin® 350 der Firma Ciba-Geigy AG: 2-(2H-Benzotriazol-2-yl)-4-(1,1-dimethylethyl)-6-(1-methylpropyl)-phenol.

Komponente C:

1. Chimasorb® 944 LD der Firma Ciba-Geigy AG: Poly-6-(1,1,3,3-tetramethylbutyl)amino-1,3,5-triazin-2,4-diyl(2,2,6,6-tetramethyl-4-piperidinyl)-imino-1,6-hexandiyl(2,2,6,6-tetramethyl-14-piperidinyl)imino
2. Tinuvin® 622 LD der Firma Ciba-Geigy AG: Dimethylsuccinatpolymer mit 4-Hydroxy-2,2,6,6-tetramethyl-1-piperidinethanol
3. Tinuvin® 770 LD der Firma Ciba-Geigy AG: Bis(2,2,6,6-tetramethyl-4-piperidyl)sebazat.

Komponente D:

Die Eigenschaften der erfindungsgemäßen und nicht erfindungsgemäßen Rußtypen sind der Tabelle 1 zu entnehmen:

Tabelle 1

| | DBP-Adsorption (ml/100 g) | Mittlere Primärteilchengröße (nm) |
|---|---|---|
| Erfindungsgemäße Ruße: | | |
| D1 | 170 | 13 |
| D2 | 160 | 15 |
| D3 | 115 | 20 |
| D4 | 115 | 26 |
| D5 | 380 | 30 |
| nicht erfindungsgemäße Ruße: | | |
| D6 | 112 | 95 |
| D7 | 96 | 51 |
| D8 | 47 | 17 |
| D9 | 118 | 41 |
| D10 | 95 | 14 |

Die mittlere Primärteilchengröße wurde als arithmetischer Mittelwert in nm mit einem Zeiss-Teilchengrößen-Analysator nach Endter und Gebauer anhand von elektronenmikroskopischen Aufnahmen bestimmt.

Zur Herstellung der Formmassen wurden 98,7 Gew.-% der Komponente A) mit jeweils 0,5 Gew.-% der Komponenten B) und C) sowie 0,3 Gew.-% der Komponente D) auf einem Zweischneckenextruder bei 220 °C compoundiert, entgast und als Strang ausgepreßt sowie granuliert.

Zur Bestimmung der UV-Stabilität wurden auf einer Spritzgußmaschine bei 200 °C Normprüfkörper hergestellt und im Xenotest nach SAE J 1960 über einen Zeitraum von 900 h künstlich bewittert.

Anschließend wurde an diesen Proben der Glanzwert nach DIN 67 530 bei einem Meßwinkel von 60 °C bestimmt. Als Meßgröße ergibt sich der Glanzwert in %, bezogen auf den Ausgangswert des nicht bewitterten Prüfkörpers.

Die Ergebnisse der Messungen und die Zusammensetzung der Formmassen sind der Tabelle 2 zu entnehmen.

Tabelle 2

| Komp. B) | | Komp. C) | Komp. D) | Glanz [%] |
|---|---|---|---|---|
| Beispiele erfindungsgemäß | | | | |
| 1 | 5 | 2 | 1 | 73 |
| 2 | 5 | 2 | 2 | 75 |
| 3 | 5 | 2 | 3 | 69 |
| 4 | 5 | 2 | 4 | 65 |
| 5 | 5 | 2 | 5 | 69 |
| 6 | 4 | 3 | 1 | 74 |
| 7 | 1 | 2 | 1 | 76 |
| 8 | 2 | 3 | 1 | 72 |
| 9 | 3 | 2 | 1 | 74 |
| 10 | 1 | 3 | 2 | 79 |
| 11 | 4 | 1 | 2 | 76 |
| 12 | 4 | 3 | 3 | 71 |
| 13 | 1 | 3 | 5 | 78 |
| Vergleichsbeispiele | | | | |
| A | 5 | 2 | 6 | 13 |
| B | 5 | 2 | 7 | 16 |
| C | 5 | 2 | 8 | 17 |
| D | 5 | 2 | 9 | 22 |
| E | 5 | 2 | 10 | 45 |
| F | 4 | 3 | 6 | 12 |
| G | 1 | 2 | 10 | 34 |
| H | 4 | 1 | 8 | 23 |
| I | 1 | 3 | 7 | 17 |
| K | 2 | 3 | 9 | 12 |
| L | 3 | 2 | 9 | 10 |
| M | - | - | 1 | 25 |
| N | - | 2 | 1 | 32 |
| O | - | 2 | 5 | 36 |
| P | 1 | - | 2 | 44 |
| Q | - | 3 | 3 | 38 |
| R | 2 | - | 3 | 48 |
| S | - | 1 | 4 | 45 |
| T | 1 | - | 5 | 51 |

Die Beispiele 1 - 5 und die Vergleichsbeispiele A - E zeigen, daß bei der Verwendung des gleichen UV-Absorbers 5 (Tinuvin 350) und der gleichen HALS-Verbindung 2 (Tinuvin 622 LD) die erfindungsgemäßen Ruße 1- 5 im Vergleich zu den nicht erfindungsgemäßen Rußen 6 - 10 deutlich günstigere UV-Stabilitäten bewirken.

Die Beispiele 6 - 13 und die Vergleichsbeispiele F - L zeigen weiterhin, daß auch bei der Verwendung anderer UV-Absorber und HALS-Verbindungen die erfindungsgemäßen Ruße eine hohe UV-Stabilität bewirken, während die nicht erfindungsgemäßen Ruße nichtzufriedenstellende UV-Stabilitäten aufweisen.

Die Vergleichsbeispiele M - T zeigen schließlich, daß die alleinige Verwendung der erfindungsgemäßen Ruße mit nur einem UV-Absorber oder nur einer HALS-Verbindung ungünstigere UV-Stabilitäten zur Folge haben als die Kombination dieser Ruße mit UV-Absorber und HALS-Verbindung.

**Patentansprüche**

**1.** Thermoplastische Formmassen, enthaltend

A) 40-99,7 Gew.-% eines Polyoxymethylenhomo- oder copolymerisates

B) 0,1 - 2 Gew.-% mindestens eines Stabilisators aus der Gruppe der Benzotriazolderivate oder Benzophenonderivate oder aromatischen Benzoatderivate,

C) 0,1 - 2 Gew.-% mindestens einer sterisch gehinderten Aminverbindung
D) 0,1 - 4 Gew.-% Ruß mit einer Dibutylphthalat-Adsorption von mindestens 100 ml/100 g und einer mittleren Primärteilchen größe ≦ 30 nm,
E) 0 - 50 Gew.-% eines schlagzäh modifizierenden Polymeren und
F) 0 - 50 Gew.-% faser- oder teilchenförmige Füllstoffe oder deren Mischungen.

**2.** Thermoplastische Formmassen nach Anspruch 1, enthaltend
A) 60 - 99 Gew.-%
B) 0,2 - 1,5 Gew.-%
C) 0,2 - 1,5 Gew.-%
D) 0,2 - 2 Gew.-%.

**3.** Thermoplastische Formmassen nach den Ansprüchen 1 oder 2, in denen die Komponente D) eine mittlere Teilchengröße ≦ 20 nm aufweist.

**4.** Thermoplastische Formmassen nach den Ansprüchen 1 bis 3, in denen die Komponente D) eine Dibutylphthalat-Adsorption von mindestens 120 ml/100 g aufweist.

**5.** Thermoplastische Formmassen nach den Ansprüchen 1 bis 4, in denen als Komponente C) ein Derivat des 2,2,6,6-Tetramethylpiperidins eingesetzt wird.

**6.** Verwendung der thermoplastischen Formmassen gemäß den Ansprüchen 1 bis 5 zur Herstellung von Fasern, Folien und Formkörpern.

**7.** Formkörper, erhältlich aus den thermoplastischen Formmassen gemäß den Ansprüchen 1 bis 5.